(19) Europäisches Patentamt
European Patent Office
Office européen des brevets

(11) **EP 3 869 020 A1**

(12) **EUROPÄISCHE PATENTANMELDUNG**

(43) Veröffentlichungstag:
**25.08.2021 Patentblatt 2021/34**

(21) Anmeldenummer: **20159077.5**

(22) Anmeldetag: **24.02.2020**

(51) Int Cl.:
**F02B 37/22** (2006.01)  **F01D 17/16** (2006.01)
**F02C 9/22** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **BMTS Technology GmbH & Co. KG
70376 Stuttgart (DE)**

(72) Erfinder: **HENZLER, Simon
73760 Ostfildern (DE)**

(74) Vertreter: **Herrmann, Jochen
Patentanwalt
European Patent Attorney
Königstrasse 30
70173 Stuttgart (DE)**

(54) **VERDICHTER**

(57)     Die Erfindung betrifft einen Verdichter, insbesondere Gasverdichter, beispielsweise für einen Turbolader, zum Verdichten eines gasförmigen Fluides, mit einem Verdichtergehäuse (40) in dem ein Verdichterrad (41) drehbar angeordnet ist, wobei das Verdichtergehäuse (40) eine Gaszuführung (43) aufweist, über die Gas dem Verdichterrad (41) zuförderbar ist, wobei ein Verdichterkanal (42) vorgesehen ist, über den das verdichtete Gas vom Verdichterrad (41) abführbar ist, wobei im Bereich der Gaszuführung (43) eine Verstelleinrichtung (60) angeordnet ist, wobei die Verstelleinrichtung (60) linear zwischen einer Schließstellung und einer Öffnungsstellung verstellbare Blendenelemente (70) aufweist, mittels denen der Öffnungsquerschnitt der Gaszuführung (43) in einem Kanalbereich, zur Bildung eines minimalen Öffnungsquerschnitts (Ömin) in der Schließstellung und eines maximalen Öffnungsquerschnitts (Ömax) in der Öffnungsstellung, veränderbar ist, wobei jeweils zwei benachbarte Blendenelemente (70) Dichtabschnitte (73.1, 76.1) aufweisen, die in der Schließstellung zur Bildung einer Blendenfläche einander gegenüberstehen, insbesondere aneinander anliegen. Um bei einem solchen Verdichter eine zuverlässig arbeitende Verstelleinrichtung verwirklichen zu können, ist es erfindungsgemäß vorgesehen, dass die Dichtabschnitte (73.1, 76.1) in der Öffnungsstellung und/oder in einer Zwischenstellung zwischen der Öffnungsstellung und der Schließstellung zueinander beabstandet angeordnet sind.

Fig.1

**EP 3 869 020 A1**

**Beschreibung**

Die Erfindung betrifft einen Verdichter, zum Verdichten eines gasförmigen Fluides, mit einem Verdichtergehäuse in dem ein Verdichterrad drehbar angeordnet ist, wobei das Verdichtergehäuse eine Gaszuführung aufweist, über die Gas dem Verdichterrad zuförderbar ist, wobei ein Verdichterkanal vorgesehen ist, über den das verdichtete Gas vom Verdichterrad abführbar ist, wobei im Bereich der Gaszuführung eine Verstelleinrichtung angeordnet ist, wobei die Verstelleinrichtung linear zwischen einer Schließstellung und einer Öffnungsstellung verstellbare Blendenelemente aufweist, mittels denen der Öffnungsquerschnitt der Gaszuführung in einem Kanalbereich, zur Bildung eines minimalen Öffnungsquerschnitts in der Schließstellung und eines maximalen Öffnungsquerschnitts in der Öffnungsstellung, veränderbar ist, wobei jeweils zwei benachbarte Blendenelemente Dichtabschnitte aufweisen, die in der Schließstellung zur Bildung einer Blendenfläche einander gegenüberstehen, insbesondere aneinander anliegen,

Solche Verdichter bilden insbesondere Gasverdichter, beispielsweise für einen Turbolader, einen elektrischen Verdichter oder dergleichen.

Aus der DE 10 2018 202 066 A1 ist ein Verdichter für einen Turbolader bekannt. Turbolader werden zum Verdichten von Ladeluft in einem Verbrennungsmotor eingesetzt. Dabei kommt ein Verdichterrad zum Einsatz, welches in einer Gaszuführung Ladeluft ansaugt und diese verdichtet. Die in Verdichtern eingesetzten Verdichterräder sind üblicherweise auf einen bestimmten Betriebsbereich ausgelegt, der einen bestimmten begrenzt variierenden Massenstrom an zugeführter Luft berücksichtigt. Nun ist es jedoch so, dass während des Betriebs des Verbrennungsmotors die Menge der benötigten Ladeluft stark variieren kann. Um die Pumpengrenze und die Stopfgrenze des Verdichters auf die variierenden Ladeluft-Anforderungen anpassen zu können, wird in der DE 10 2018 202 066 A1 eine Anpassung des Öffnungsquerschnitts der Gaszuführung vorgeschlagen. Zu diesem Zweck kommt eine Verstelleinrichtung zum Einsatz. Die Verstelleinrichtung weist eine Vielzahl von Blendenelementen auf. Die Blendenelemente können zwischen einer Öffnungsstellung und einer Schließstellung verstellt werden. In der Öffnungsstellung geben die Blendenelemente den maximalen Öffnungsquerschnitt der Gaszuführung frei. In einer Schließstellung bilden die Blendenelemente eine Blende mit einem Öffnungsquerschnitt, wobei dieser Öffnungsquerschnitt kleiner ist als der maximale Öffnungsquerschnitt. Die DE 10 2018 202 066 A1 schlägt vor, die Blendenelemente linear verstellbar an einem Lagerring der Verstelleinrichtung zu halten. Damit können die Blendenelemente linear zwischen der Öffnungsstellung und der Schließstellung hin und her bewegt werden. Die benachbarten Blendenelemente bilden senkrecht zur Blendenebene Dichtungsabschnitte, die während der Verstellbewegung der Blendenelemente aneinander vorbeigleiten. Auf diese Weise wird garantiert, dass sowohl in der Schließstellung als auch in Zwischenstellungen zwischen der Öffnungsstellung und der Schließstellung keine oder nur wenig Falschluft zwischen den Blendenelementen hindurchströmt.

Aus der WO 2018/106620 A1 und der EP 3 236 077 A1 sind Verdichter bekannt, die auf dem gleichen Grundprinzip arbeiten, wie der vorstehend beschriebene Verdichter der DE 10 2018 202 066 A1. Anstelle von linear verschiebbaren Blendenelementen schlagen diese Dokumente vor, die Blendenelemente schwenkbar an einem Lagerring zu fixieren. Entsprechend können die Blendenelemente zwischen einer Öffnungs- und einer Schließstellung verschwenkt werden In der Schließstellung liegen die Blendenelemente im Bereich von Dichtabschnitten aneinander an. Wenn die Blendenelemente von der Schließstellung in die Öffnungsstellung gedreht werden, so vergrößert sich der Abstand der Dichtabschnitte kontinuierlich. Dabei entstehen sich vergrößernde Spalte, durch die in den Zwischenstellungen "Falschluft" hindurchströmt und Turbulenzströmungen entstehen können. Hierdurch wird der Wirkungsgrad der Verstelleinrichtung reduziert, d.h. bei geschlossener Verstelleinrichtung wird das Verdichterkennfeld weniger zu kleineren Massenströmen zugeführter Luft hin verschoben.

Es ist Aufgabe der Erfindung, einen Verdichter mit einer zuverlässig arbeitenden Verstelleinrichtung bereitzustellen, die wirkungsgradoptimiert an wechselnde Betriebszustände anpassbar ist.

Diese Aufgabe wird mit den Merkmalen des Anspruchs 1 gelöst. Demgemäß ist es vorgesehen, dass die linear verfahrbaren Blendenelemente mit ihren Dichtabschnitten in der Schließstellung einander gegenüberstehen, insbesondere aneinander anliegen und in der Öffnungsstellung und/oder in einer Zwischenstellung zwischen der Öffnungsstellung und der Schließstellung zueinander beabstandet angeordnet sind.

In der Schließstellung können die Dichtabschnitte der benachbarten Blendenelemente dichtend aneinander gefahrenen werden. Damit wird sichergestellt, dass in der Schließstellung keine oder nur vernachlässigbar kleine Mengen Luft zwischen den Dichtabschnitten hindurchströmt. Erfindungsgemäß sind die Blendenelemente linear verfahrbar. Wenn die Blendenelemente von ihrer Schließstellung in die Öffnungsstellung gefahren werden, so geschieht dies nach der Erfindung derart, dass die Dichtabschnitte geringfügig zueinander beabstandet angeordnet werden. Damit wird die Verstellbewegung durch aneinander vorbei gleitende Dichtabschnitte nicht behindert. Dies führt zu einer zuverlässig arbeitenden Verstelleinrichtung, bei der insbesondere auch eine Blockade, infolge von verkanten der Blendenelemente, ausgeschlossen ist. Insbesondere lassen sich dadurch auch einfachere Lagerelemente für die Blendenelemente verwirklichen. Da die Blendenelemente, wie dargestellt, linear verfahrbar sind, ist es bei einer Verstellung von der Schließbewegung in die Öffnungsbewegung möglich, die Beabstandung der Dichtabschnitte auf dem gesamten Verstellweg zu minimieren. Dies garantiert, dass auch in den Zwischenstellungen zwischen der Öffnungsstellung und der Schließstellung allenfalls nur geringe "Falschluft-Strömungen" zwischen den Dichtabschnitten entstehen. Hierdurch wird eine wirkungsgradoptimierte Auslegung des Verdichters möglich. Insbesondere kann die Pumpgrenze bei geringen Massenströmen zugeführter Luft wirkungsvoll angehoben werden.

Gemäß einer bevorzugten Ausgestaltungsvariante der Erfindung kann es vorgesehen sein, dass die Dichtabschnitte auf dem Verstellweg zwischen der Öffnungs- in die Schließstellung zueinander parallel ausgerichtet sind. Die Blendenelemente können dann konstruktiv einfach ausgelegt werden. Vorzugsweise ist es so, dass die Dichtabschnitte auf dem Verstellweg zwischen der Öffnungs- in die Schließstellung in jeder Zwischenstellung zueinander parallel ausgerichtet sind. Auf diese Weise können insbesondere in jeder Zwischenstellung gleichbleibende oder annähernd gleichbleibende Spaltbreiten verwirklicht werden.

Gemäß einer denkbaren Erfindungsalternative kann es hierbei insbesondere vorgesehen sein, dass die Blendenelemente zwei linear verlaufende Dichtabschnitte aufweisen, die zueinander im Winkel angeordnet sind, wobei der eine Dichtabschnitt an einem zugeordneten Dichtabschnitt eines ersten benachbarten Blendenelement und der weitere Dichtabschnitt an einem zugeordneten Dichtabschnitt eines zweiten benachbarten Blendenelements anliegt.

Ein erfindungsgemäßer Verdichter kann auch dergestalt sein, dass ein erster linear verlaufender Dichtabschnitt des Blendenelements im Winkel zu der Bewegungsrichtung des Blendenelements angestellt ist, und dass dieser Winkel kleiner ist als X, wobei: "X = 360° / (Anzahl der Blendenelemente" ist und/oder X dem Winkel entspricht, den die beiden linearen Dichtabschnitte des Blendenelements einschließen. Diese einfache Maßnahme stellt sicher, dass die Dichtabschnitte benachbarter Blendenelemente im Schließzustand aneinander gefahren werden können und sie sich bei einer Bewegung von der Schließstellung in Richtung auf die Öffnungsstellung dann unmittelbar voneinander beabstandeten. Entsprechend werden nur minimale Kräfte benötigt um die Schließstellung aufzuheben.

Minimale Spaltabstände lassen sich nach einer Variante der Erfindung in den Zwischenstellungen dadurch erreichen, dass die Differenz zwischen dem halben Winkel X und dem Winkel β welcher zwischen einer Senkrechten auf den Dichtabschnitt des Blendenelements und der Bewegungsrichtung des Blendenelements gebildet ist, kleiner ist als 10°, so dass gilt:

$$„(0{,}5 * X - β) < 10°".$$

Besonders bevorzugt kann es dabei vorgesehen sein, dass die Differenz zwischen dem halben Winkel X und dem Winkel β welcher zwischen einer Senkrechten auf den Dichtabschnitt des Blendenelements und der Bewegungsrichtung des Blendenelements gebildet ist, kleiner ist als 5°, so dass gilt:

$$„(0{,}5 * X - β) < 5°".$$

In diesem Fall wird die Leckageströmung zwischen den Dichtabschnitten der Blendenelemente bei Anwendungen in Turboladern auf ein akzeptables Maß minimiert.

Für besonders anspruchsvolle Turbolader-Systeme kann es vorgesehen sein, dass die Differenz zwischen dem halben Winkel X und dem Winkel β welcher zwischen einer Senkrechten auf den Dichtabschnitt des Blendenelements und der Bewegungsrichtung des Blendenelements gebildet ist, kleiner ist als 2°, so dass gilt:

$$„(0{,}5 * X - β) < 2°".$$

Für solche hoch anspruchsvolle Turbolader-Systeme kann es insbesondere auch vorgesehen sein, dass die Dichtabschnitte in den Zwischenstellungen zwischen der Öffnungsstellung und der Schließstellung und in der Öffnungsstellung nicht weiter als 1 mm, bevorzugt nicht weiter als 0,3 mm zueinander beabstandet angeordnet sind.

Eine weiter bevorzugte Erfindungsvariante kann dergestalt sein, dass zumindest ein Blendenelement wenigstens zweier benachbarter Blendenelemente im Bereich zumindest eines seiner Dichtabschnitte einen Überlappungsabschnitt aufweist, dessen Projektion in Strömungsrichtung in der Gaszuführung, vorzugsweise in Richtung der Drehachse des Verdichterrads, den Dichtabschnitt des benachbarten Blendenelements in der Schließstellung und in zumindest einer Zwischenstellung zwischen der Öffnungsstellung und der Schließstellung zumindest teilweise überdeckt. Dies garantiert bei zuverlässiger Bedienbarkeit der Verstelleinrichtung eine Abdichtung auch dann, wenn in der Zwischenstellung die Dichtabschnitte zueinander im geringen Abstand stehen. Vorzugsweise ist es so, dass in jeder Zwischenstellung eine Überdeckung gewährleistet ist.

Erfindungsgemäß kann es auch vorgesehen sein, dass wenigstens eines der Blendenelemente an beiden Dichtabschnitten einen Überlappungsabschnitt aufweist, wobei der eine Überlappungsabschnitt das benachbarte erste Blendenelement in Strömungsrichtung der Gaszuführung vorne überlappt und der zweite Überlappungsabschnitt das benachbarte zweite Blendenelement in Strömungsrichtung der Gaszuführung ebenfalls vorne überlappt. Dies hat den Vorteil der vereinfachten Herstellbarkeit, da beide Überlappungsabschnitte für das jeweilige Blendenelement von der gleichen Seite geprägt werden können. Allerdings werden in diesem Fall zwei Arten unterschiedlich geprägter Blendenelemente für eine Verstelleinrichtung benötigt, was den Teileaufwand vergrößert. Zudem schränkt es die Konstruktion derart ein, dass nur eine gerade Anzahl von Blendenelementen verwendet werden kann.

Erfindungsgemäß kann es auch vorgesehen sein, dass wenigstens eines der Blendenelemente an beiden Dichtabschnitten einen Überlappungsabschnitt aufweist, wobei der eine Überlappungsabschnitt das benachbarte erste Blendenelement in Strömungsrichtung der Gaszuführung vorne überlappt und der zweite Überlappungsabschnitt das benachbarte zweite Blendenelement in Strömungsrichtung der Gaszuführung hinten überlappt. Dies macht es möglich die Blendenelemente einfach aufzubauen. Insbesondere wird es dann auch möglich, die Blendenelemente baugleich auszuführen. Damit ergibt sich eine Verringerung des Teileaufwands und die Anzahl der Blendenelemente kann beliebig variiert werden.

Ein erfindungsgemäßer Verdichter kann auch dadurch gekennzeichnet sein, dass die Dichtabschnitte wenigstens zweier benachbarter Blendenelemente Überlappungsabschnitte aufweisen, deren Projektionen sich in Richtung der Strömungsrichtung in der Gaszuführung, vorzugsweise in Richtung der Drehachse des Verdichterrads, zumindest teilweise überdecken. Hierdurch lassen sich beispielsweise labyrinthartige Dichtungen verwirklichen. Insbesondere können dabei Strukturen geschaffen werden, bei denen Überlappungsabschnitte an den benachbarten Blendenelementen vorgesehen sind, die kammartig im Schließzustand und/oder in einer Zwischenstellung ineinandergreifen.

Denkbar ist es auch, dass der oder die Überlappungsabschnitte wenigstens zweier benachbarter Blendenelemente in der Schließstellung und/oder in wenigstens einer Zwischenstellung dichtend auf dem oder den benachbarten Blendenelement/-en aufliegt/aufliegen. Zu diesem Zweck kann es insbesondere vorgesehen sein, dass die Überlappungsabschnitte als gegenüber einem Grundkörper des Blendenelements biegbarer Dichtungsansatz ausgebildet sind.

Während des Betriebseinsatzes herrscht zwischen der Anström- und der Abströmseite der Verstelleinrichtung ein Differenzdruck.

Die Auslegung der Dichtansätze kann dabei beispielsweise dann so sein, dass infolge des Differenzdrucks die Dichtungsansätze abgebogen werden und sich dichtend an das benachbarte Blendenelement anlegen. Der Dichtansatz eines Blendenelements liegt in jeder Stellung der Blendenelemente zumindest teilweise auf einem benachbarten Blendenelement auf, so dass sich das benachbarte Blendenelement immer (in Strömungsrichtung) hinter den Dichtansatz schieben kann und es nicht zum Verklemmen kommt.

Zusätzlich oder alternativ kann es auch vorgesehen sein, dass die benachbarten Blendenelemente gegeneinander versetzbar sind, um die Überlappungsabschnitte zur dichtenden Anlage an dem oder den benachbarten Blendenelementen zu bringen. Zu diesem Zweck kann es insbesondere vorgesehen sein, dass die Lagerung der Dichtelemente eine Verstellung der Blendenelemente in Strömungsrichtung der Gaszuführung ermöglicht. Hierdurch entsteht ein Spiel, das dazu ausgenutzt werden kann, die Dichtansätze, aufgrund des beschriebenen Differenzdrucks, zu Anlage zu bringen.

Zur Verringerung des Teile- und Montageaufwands kann es insbesondere auch vorgesehen sein, dass der wenigstens eine Überlappungsabschnitt einteilig an das Blendenelement angeformt ist. So kann es beispielsweise vorgesehen sein, die Blendenelemente mit dem Überlappungsabschnitt einteilig als Kunststoffteil auszuführen. Dabei kann insbesondere ein Kunststoff-Spritzgussteil einfach gefertigt werden. Alternativ ist es denkbar, dass die Blendenelemente als Stanz-Biegeteile aus einem Blech-Zuschnitt gefertigt werden. Der oder die Überlappungsabschnitte können dann einfach geprägt werden.

Eine weitere bevorzugte Ausgestaltung der Blendenelemente sieht vor, dass die einander zugewandten Überlappungsabschnitte zweier benachbarter Blendenelemente unterschiedlich gestaltet sind, so dass in der Schließstellung der Überlappungsabschnitt des ersten Blendenelements mit seiner Dichtfläche an der Dichtfläche des zweiten Blendenelements anliegt und der Überlappungsabschnitt des zweiten Blendenelements mit seiner Dichtfläche mit der der Dichtfläche des ersten Blendenelements einen Spalt bildet.

Eine besonders bevorzugte Ausgestaltung der Erfindung sieht vor, dass die Verstelleinrichtung eine Lagereinheit aufweist, die vorzugsweise in Form eines Lagerrings ausgebildet ist, dass die Lagereinheit mehrere Gleitführungen mit Linear-Führungsbereichen aufweist, an denen jeweils ein Blendenelement mittels eines Führungselements verschiebbar gelagert ist, und dass vorzugsweise die Lagereinheit Führungsflächen bildet, auf denen die Blendenelemente mit Gleitflächen abgestützt sind.

Weiterhin ist es denkbar den Verdichter so zu konzipieren, dass die Verstelleinrichtung eine Stelleinheit aufweist, die vorzugsweise in Form eines Stellrings ausgebildet ist, dass die Verstelleinrichtung eine Betätigungseinrichtung aufweist, mittels der die Stelleinheit verstellbar, insbesondere verdrehbar ist, dass die Stelleinheit Gleitführungen mit Linear-Führungsbereichen aufweist, an denen jeweils ein Blendenelement mittels eines Führungselements verschiebbar gelagert ist, und dass vorzugsweise die Stelleinheit Führungsflächen bildet, auf denen die Blendenelemente mit Gleitflächen abgestützt sind. Hierdurch lässt sich eine denkbar einfach gestaltete Verstelleinrichtung verwirklichen.

Wenn vorgesehen ist dass sich an die Dichtungsabschnitte der Blendenelemente Begrenzungselemente anschließen, die konkav ausgebildet sind, und dass die Begrenzungselemente im Schließzustand der Blendenelemente eine zumindest annähernd kreisförmige Blendenöffnung bilden, dann lässt sich der Öffnungsquerschnitt, welcher durch die Blende definiert wird, im Schließzustand an eine kreisförmige Öffnung zumindest annähern. Hierdurch wird ein verbessertes Strömungsverhalten unter Vermeidung von Turbulenzströmungen erreicht.

Besonders bevorzugt kann es vorgesehen sein, dass die Bewegung der Blendenelemente von der Öffnungsstellung in die Schließstellung mittels eines Anschlages begrenzt ist, der in der Schließstellung an einem Gegenanschlag anliegt. Dies verhindert, dass die Blendenelemente sich in der Schließstellung verklemmen. Vorzugsweise werden dabei der Anschlag und der Gegen-Anschlag von den benachbarten Blendenelementen selbst gebildet. Insbesondere können der Anschlag und/oder der Gegen-Anschlag einteilig mit den Blendenelementen ausgebildet sein.

Hierbei eignet sich in besonderer Weise eine Ausgestaltung, bei der ein benachbartes Blendenelement einen Gegen-Anschlag, beispielsweise in Form einer Ausnehmung, aufweist und dass gegen einen solchen Gegen-Anschlag das Blendenelement in der geschlossenen Stellung in einem stumpfen Winkel zu seiner Bewegungsrichtung mit seinem Anschlag, beispielsweise einer Körperkante, anschlägt.

Verdichter, insbesondere Turbolader, werden zum Zwecke der Geräuschreduzierung mitunter mit umlaufenden Nuten im Bereich der Gaszuführung ausgerüstet. Diese umlaufenden Nuten bilden einen Helmholtzresonator, der dazu dient störende Frequenzen aus dem Emissionsspektrum des Verdichters auszulöschen. Um bei einem solchen Verdichter gemäß der Aufgabe der Erfindung eine Wirkungsgradoptimierung und gleichzeitig eine Geräuschreduzierung auf einfache Weise ermöglichen zu können, wird ein Verdichter vorgeschlagen, mit einem Verdichtergehäuse in dem ein Verdichterrad drehbar angeordnet ist, wobei das Verdichtergehäuse eine Gaszuführung (43) aufweist, über die Gas dem Verdichterrad zuförderbar ist, wobei ein Verdichterkanal vorgesehen ist, über den das verdichtete Gas vom Verdichterrad abführbar ist, wobei im Bereich der Gaszuführung eine Verstelleinrichtung angeordnet ist, wobei die Verstelleinrichtung zwischen einer Schließstellung und einer Öffnungsstellung verstellbare Blendenelemente aufweist, mittels denen der Öffnungsquerschnitt der Gaszuführung in einem Kanalbereich, zur Bildung eines minimalen Öffnungsquerschnitts in der Schließstellung und eines maximalen Öffnungsquerschnitts in der Öffnungsstellung, veränderbar ist, wobei jeweils zwei benachbarte Blendenelemente Dichtabschnitte (aufweisen, die in der Schließstellung zur Bildung einer Blendenfläche einander gegenüberstehen, insbesondere aneinander anliegen. Dabei kann es insbesondere vorgesehen sein, dass die Blendenelemente in eine zurückgezogene Betriebsposition verstellbar sind, in der Körperbereiche der Blendenelemente zumindest bereichsweise eine Vertiefung in der Gaszuführung, insbesondere eine umlaufende Nut, zur Bildung eines Helmholtzresonators begrenzen.

Hierbei können die Blendenelemente dann, wenn während des Betriebs kein Ausfahren der Blendenelemente notwendig ist in die zurückgezogene Stellung bewegt werden. In Weiterbildung dieser Erfindung kann es insbesondere vorgesehen sein kann, dass die Blendenelemente zwischen mehreren zurückgezogenen Betriebspositionen, vorzugsweise stufenlos verstellbar sind.

Dementsprechend bildet die Verstelleinrichtung dann, wenn die Blendenelemente zurückgezogen sind, gleichzeitig zumindest einen Teil des Helmholtzresonators.

Hierdurch verringert sich insbesondere auch der Teile- und Montageaufwand für den Verdichter.

Die Erfindung wird im Folgenden anhand eines in den Zeichnungen dargestellten Ausführungsbeispiels näher erläutert. Es zeigen:

Figur 1 einen Abgas-Turbolader in Seitenansicht und im Vollschnitt,

Figur 2 in perspektivischer Darstellung und im Teilschnitt eine Baueinheit des AbgasTurboladers gemäß Figur 1,

Figur 3 die Baueinheit gemäß Figur 2 im Vollschnitt,

Figur 4 in Teildarstellung und Frontansicht einer Verstelleinrichtung,

Figuren 5 und 6 ein Blendenelement in zwei verschiedenen perspektivischen Darstellungen,

Figur 7 bis Figur 9 verschiedene Betriebsstellungen der Verstelleinrichtung in Frontansicht,

Figur 10 eine alternative Ausgestaltungsvariante einer Verstelleinrichtung in Teildarstellung und Frontansicht,

Figur 10a die Ausgestaltungsvariante gemäß Figur 10 entlang des in Figur 10 mit Xa-Xa markierten Schnittverlaufs,

Figur 11 eine weitere alternative Ausgestaltungsvariante einer Verstelleinrichtung in Teildarstellung und Frontansicht,

Figur 11a die Ausgestaltungsvariante gemäß Figur 11 entlang des in Figur 11 mit XIa-XIa markierten Schnittverlaufs,

Figur 12 eine weitere alternative Ausgestaltungsvariante einer Verstelleinrichtung in Teildarstellung und Frontansicht,

Figur 12a die Ausgestaltungsvariante gemäß Figur 12 entlang des in Figur 12 mit XIIa-XIIa markierten Schnittverlaufs,

Figuren 13 und 14 eine weitere Alternative einer Verstelleinrichtung in Teilansicht und in Teil-Darstellung und

Figur 15 in schematischer Teildarstellung und im Schnitt eine weitere Erfindungsvariante.

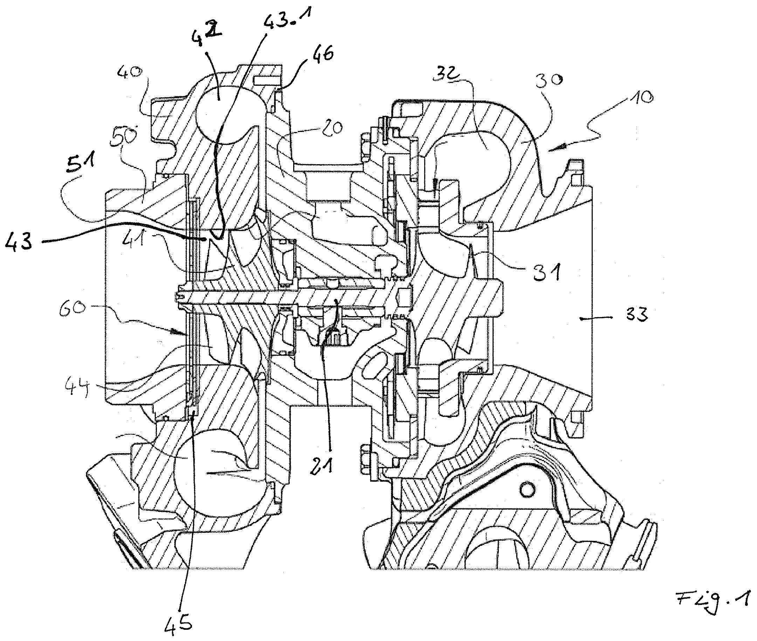

Figur 1 zeigt einen Turbolader 10, nämlich einen Abgas-Turbolader, wie er bei Kraftfahrzeugen mit Verbrennungsmotor typischerweise zum Einsatz kommt. Der Turbolader 10 weist ein Gehäuse 20 auf. In diesem Gehäuse 20 ist eine Welle 21 drehbar gelagert. Die Welle 21 trägt an ihrem einen Ende ein Verdichterrad 41 und an ihrem anderen Ende eine Turbine 31.

Die Turbine 31 ist in einem Turbinengehäuse 30 aufgenommen. Das Turbinengehäuse 31 bildet einen Spiralkanal 32. Dieser ist kanalförmig ausgebildet. Über den Abgas-Zutritt und den Spiralkanal 32 kann vom Verbrennungsmotor kommendes Abgas der Turbine 31 zugeführt werden. Das Turbinengehäuse 30 bildet weiterhin einen Abgas-Austritt 33. Wie die Darstellung erkennen lässt, wird das Abgas der Turbine 31 radial zur Drehrichtung zugeführt. Im Abgas-Austritt 33 verlässt das Abgas das Turbinengehäuse 30 in Richtung der Drehachse.

Das Verdichterrad 41 ist von einem Verdichtergehäuse 40 umgeben. Im Verdichtergehäuse 40 ist ein Verdichterkanal 42 angeordnet. Weiterhin weist das Verdichtergehäuse 40 eine Gaszuführung 43 auf. Die Gaszuführung 43 bildet eine Kanalwandung 43.1. Über die Gaszuführung 43 kann das zu komprimierende Gas (beispielsweise Luft) dem Verdichterrad 41 in Richtung seiner Drehachse axial zugeführt werden.

Wie die Zeichnung erkennen lässt, kann die Gaszuführung 43 beispielsweise auch zumindest teilweise von einem Gehäuseteil 50 des Verdichtergehäuses 40 gebildet sein, wobei das Gehäuseteil 50 mit dem Basiskörper des Verdichtergehäuses 40 verbunden ist. Figur 1 zeigt, dass das Gehäuseteil 50 eine Strömungsführung 51 aufweist, die als Teil der Gaszuführung 43 in die Wandung 43.1 übergeleitet ist.

Wie Figur 1 erkennen lässt, ist die Wandung 43.1 der Gaszuführung 43 an die Kontur der Verdichterschaufeln 44 angepasst, sodass sich eine wirkungsgradoptimierte Bauweise ergibt.

Figur 1 zeigt, dass im Bereich zwischen dem Gehäuseteil 50 und dem Basiskörper des Verdichtergehäuses 40 eine Verstelleinrichtung 60 gehalten ist.

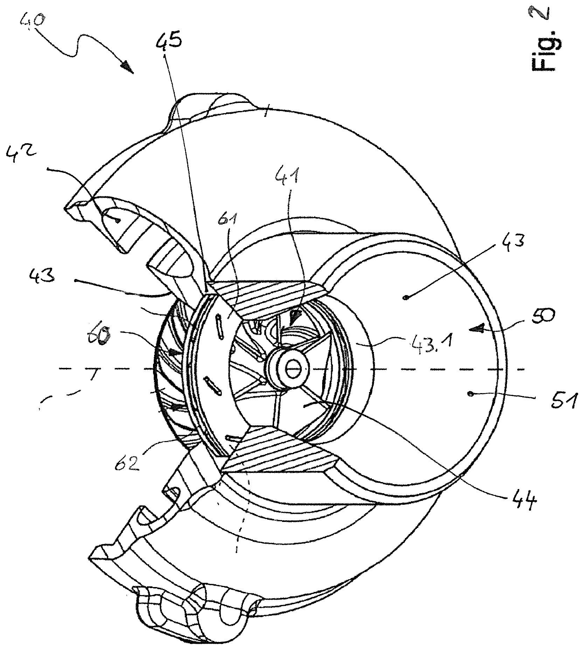

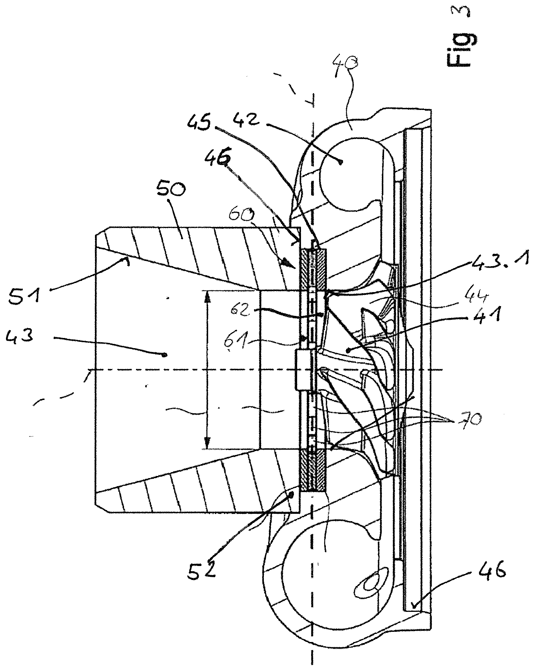

Der Aufbau der Verstelleinrichtung 60 kann näher den Figuren 2 und 3 entnommen werden. Diese Darstellungen zeigen, dass die Verstelleinrichtung 60 eine Lagereinheit 61 aufweisen kann. Beispielsweise kann, wie vorliegend dargestellt, die Lagereinheit 61 von einem ringförmigen Bauteil gebildet sein, wobei insbesondere die Lagereinheit 61 aus einem flächenförmigen Bauteil, z.B. einem Blechzuschnitt oder einem Kunststoffteil gefertigt ist. Die Lagereinheit 61 kann auch Teil des Gehäuseteils 50 sein. Vorzugsweise ist sie jedoch, wie vorliegend dargestellt als separates Bauteil ausgebildet.

Die Verstelleinrichtung 60 weist weiterhin eine Stelleinheit 62 auf. Die Stelleinheit 62 kann ebenfalls von einem ringförmigen Bauteil gebildet sein. Denkbar ist es, dass die Stelleinheit 62 ebenfalls von einem flächenförmigen Bauteil gebildet ist, z.B. aus einem Blechzuschnitt oder einem Kunststoffteil gefertigt ist.

Wie die Darstellung nach Figur 3 erkennen lässt, bilden die Lagereinheit 61 und die Stelleinheit 62 einen Öffnungsquerschnitt mit ihrem Innendurchmesser 61.6, 62.6. Dieser Öffnungsquerschnitt ist vorzugsweise so dimensioniert, dass er gleich dem maximalen Öffnungsquerschnitt Ömax der Gaszuführung 43 im Bereich der anschließenden Strömungsführung 51 des Gehäuseteil 50 bzw. der anschließenden Wandung 43.1 in Strömungsrichtung hinter der Verstelleinrichtung 60 ist. Hierdurch wird bei der in Figur 3 gezeigten Betriebsstellung dann in der Gaszuführung 43 durch die Verstelleinrichtung 60 keine Behinderung der Strömung bewirkt. Denkbar ist jedoch auch, dass die Lagereinheit 61 und/oder die Stelleinheit 62 geringfügig in die Gaszuführung 43 vorstehen oder gegenüber der Wandung 43.1 in radialer Richtung nach außen versetzt angeordnet sind.

Das Verdichtergehäuse 40 weist eine taschenförmige Aufnahme 45 auf. In diese Aufnahme 45 ist die Verstelleinrichtung 60 eingesetzt. Die Aufnahme 45 ist dabei so gestaltet, dass die Lagereinheit 61 in radialer und axialer Richtung, bezogen auf die Achse des Verdichterrades 41, an dem Verdichtergehäuse 40 festgelegt ist und sich die Stelleinheit 62 in der Aufnahme 45 verdrehen lässt.

Figur 3 lässt deutlich erkennen, dass das Verdichtergehäuse 40 eine Aufnahme aufweist, in die das Gehäuseteil 50 mit einem Zentrieransatz 52 eingesetzt ist. Damit ist das Gehäuseteil 50 lagerichtig gegenüber dem Verdichtergehäuse 40 ausgerichtet. Entsprechend können auch die Strömungsführung 51 des Gehäuseteils 50 und der Teil der Gasführung 43 im Verdichtergehäuse 40 aufeinander ausgerichtet werden.

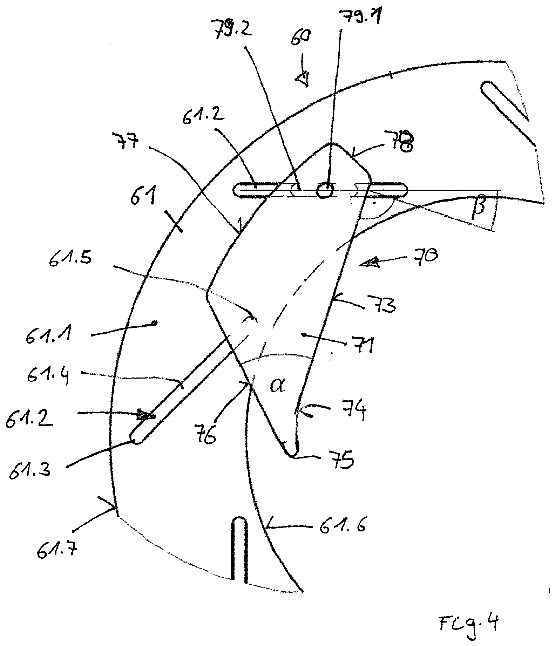

Figur 4 lässt den Aufbau der Lagereinheit 61 näher erkennen. Die Lagereinheit 61 kann, wie vorstehend erläutert vorzugsweise ringförmig ausgebildet sein. Entsprechend weist sie eine kreisförmige äußere Umfangsbegrenzung 61.7 und einen Innendurchmesser 61.6 auf. Selbstverständlich sind auch andere Formen von Lagereinheiten 61 denkbar.

Die Lagereinheit 61 weist eine Führungsfläche 61.1 auf. In die Führungsfläche 61.1 können Gleitführungen 61.2 eingearbeitet sein. Die Gleitführungen 61.2 sind vorzugsweise als schlitzförmige Durchbrechungen ausgeführt. Wie Figur 4 erkennen lässt, sind eine Vielzahl von Gleitführungen 61.2 vorgesehen diese Gleitführungen 61.2 sind gleichmäßig über den Umfang der Lagereinheit 61 verteilt angeordnet.

Die Gleitführungen 61.2 definieren einen linearen Führungsbereich 61.4. Dieser lineare Führungsbereich 61.4 kann tangential zum Innendurchmesser 61.6 verlaufen, wie Figur 4 zeigt.

Die Gleitführungen 61.2 können an ihren längsseitigen Enden mit Endbereichen 61.3, 61.5 abgeschlossen sein. Hierdurch ergibt sich eine stabile Geometrie für die ringförmige Lagereinheit 61. Gegenüberliegend der ebenen Führungsfläche 61.1 weist die Lagereinheit 61 eine ebene Fläche auf, die ebenfalls ringförmig umläuft und die zur planen Anlage an einem zugeordneten Flächenbereich des Gehäuseteils 50 dient.

Das Lagerteil 61 dient dazu eine Vielzahl von Blendenelementen 70 verstellbar aufzunehmen. Dabei können die Blendenelemente 70 vorzugsweise alle baugleich ausgebildet sein. Denkbar ist es jedoch auch, dass sich die Blendenelemente 70 baulich voneinander unterscheiden. Bei baugleichen Blendenelementen 70 reduziert sich jedoch der Teile- und Montageaufwand. Im vorliegenden Ausführungsbeispiel sind acht Blendenelemente mit der Lagereinheit 61 verbaut. Denkbar ist es jedoch, dass auch eine andere Anzahl von Blendenelementen 70 in einer Verstelleinrichtung 60 verbaut ist.

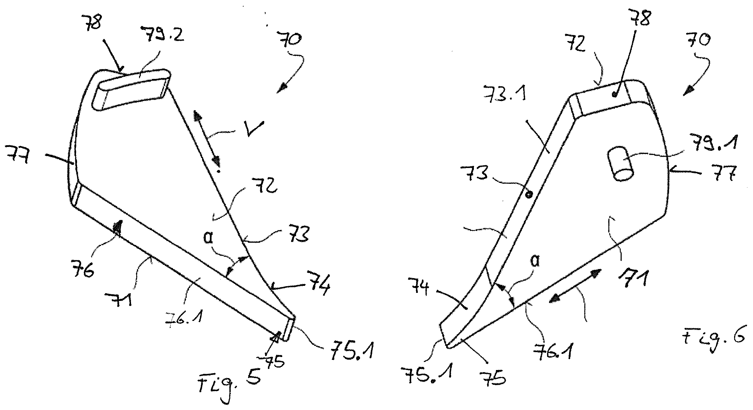

In den Figuren 5 und 6 ist die Gestaltung der Blendenelemente 70 näher detailliert. Wie diese Zeichnungen zeigen, weist das Blendenelement 70 auf einer Elementseite eine Gleitfläche 71 auf. Eine weitere Gleitfläche 72 kann auf der gegenüberliegenden Elementseite des Blendenelements 70 vorgesehen sein. Die Gleitflächen 71 und 72 können vorzugsweise zueinander parallel sein

Das Blendenelement 70 kann im Bereich der beiden Gleitflächen 71, 72 jeweils ein Führungselement 79.1, 79.2 besitzen.

Das Führungselement 79.2 steht von der Gleitfläche 72 ab. Das Führungselement 79.2 weist eine rippenförmige Gestalt auf. Die Breite des Führungselements 79.2 ist so dimensioniert, dass es in den schlitzförmigen Führungsbereich 62.4 eingepasst werden kann. Dabei ist die Zuordnung so getroffen, dass das Blendenelement 70 gegenüber der Lagereinheit 61 mit dem Führungselement 79.2 in dem Führungsbereich 62.4 linear, jedoch nicht drehbar verstellt werden kann.

Von der Gleitfläche 71 steht das Führungselement 79.1 vor. Im vorliegenden Ausführungsbeispiel ist das Führungselement 79.1 als zylinderförmiger Zapfen ausgebildet. Andere Gestaltungen des Führungselements 79.1 sind denkbar.

Wie Figuren 5 und 6 weiter erkennen lassen, weist das Blendenelement 70 einen ersten Stellbereich 73 auf. Dieser erste Stellbereich 73 bildet einen Dichtabschnitt 73.1. Im Anschluss an den Dichtabschnitt 73.1 ist ein Begrenzungsbereich 74 angeordnet.

Der Begrenzungsbereich 74 kann vorzugsweise konkav ausgebildet sein. Denkbar ist es jedoch auch, dass sich der Begrenzungsbereich 73 geradlinig oder in sonstiger Weise an den Dichtungsabschnitte 63.1 anschließt.

Der Dichtabschnitt 73.1 kann insbesondere als geradlinig verlaufender Flächenabschnitt 73.1 ausgebildet sein. Vorzugsweise steht der Dichtabschnitt 73.1 senkrecht zu der Gleitfläche 71 und/oder der Gleitfläche 72. Der Begrenzungsbereich 74 kann sich beispielsweise bevorzugt tangential an den Dichtabschnitt 73.1 unmittelbar anschließen. Denkbar ist auch, dass der Begrenzungsbereich 74 sich mittelbar an den Dichtabschnitt 73.1 über einen Zwischenabschnitt anschließt.

Das Blendenelement 70 besitzt einen Endabschnitt 75. Dieser Endabschnitt 75 kann in einer Ausführungsform der Erfindung an seinem freien Ende einen Gegenanschlag 75.1 bilden, wie dies später näher erläutert wird.

Der Endabschnitt 75 kann den Übergang zwischen dem Begrenzungsbereich 74 und einem weiteren Dichtabschnitt 76.1 bilden. Der weitere Dichtabschnitt 76.1 ist dabei Teil eines zweiten Stellbereichs 76 des Blendenelements.

Der weitere Dichtabschnitt 76.1 ist vorzugsweise als linear verlaufender Flächenabschnitt ausgebildet. Weiter bevorzugt ist dieser Dichtabschnitt 76.1 senkrecht zu der Gleitfläche 71 und/oder der Gleitfläche 72 ausgerichtet.

Die Zeichnungen gemäß Figuren 5 und 6 lassen erkennen, dass die beiden Dichtabschnitte 73.1 und 76.1 zueinander im Winkel $\alpha$ stehen. Dabei ist der Winkel $\alpha$ im vorliegenden Ausführungsbeispiel gleich 45° gewählt. Der Winkel $\alpha$ berechnet sich gemäß: 360° geteilt durch X, wobei X die Anzahl der Blendenelemente 70 der Verstelleinrichtung 60 darstellt.

Wie Figuren 5 und 6 weiter zeigen, kann sich an den ersten Stellbereich 73 einen Endabschnitt 78 anschließen. Der Endabschnitt 78 geht in eine Flanke 77 und diese wiederum in den zweiten Stellbereich 76 über.

Die Blendenelemente 70 können vorzugsweise als Kunststoff-Spritzgussteil ausgebildet sein. Dabei sind die Führungselemente 79.1, 79.2 vorzugsweise einteilig angespritzt. Denkbar ist auch, dass die Blendenelemente 70 als Stanz-Biegeteile aus einem Blechzuschnitt gefertigt werden. In diesem Fall lassen sich die Führungselemente 79.1, 79.2 beispielsweise in das Blendenelement einpressen.

Wie Figur 4 zeigt, können die Blendenelemente 70 mit dem von der Gleitfläche 72 abstehenden Führungselement 79.2 in die Gleitführung 61.2 eingesetzt werden. Auf diese Weise sind die Blendenelemente in der Gleitführung 61.2 linear entlang der Längserstreckung des Führungsbereichs 61.4 verstellbar.

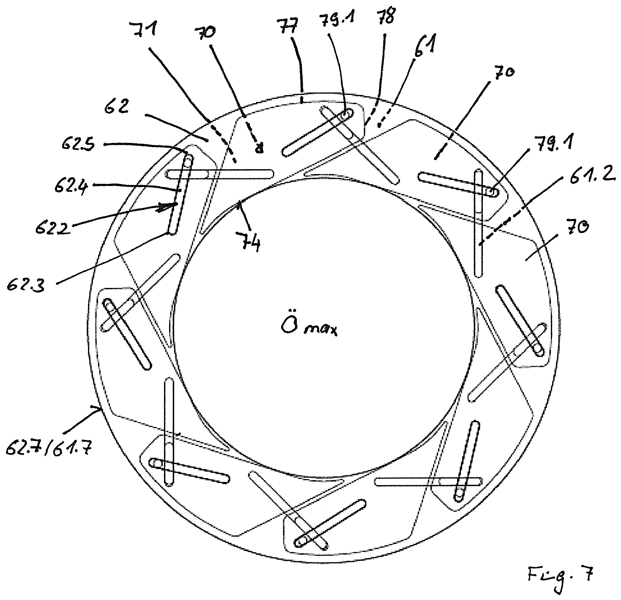

Wie Figur 7 erkennen lässt, können die vorzugsweise baugleichen Blendenelemente 70 mit dem Lagerring 61 verbaut werden. Die Darstellung gemäß Figur 7 ist so gewählt, dass zusätzlich zu der Lagereinheit 61 auch die Stelleinheit 62 gezeigt ist. Dabei ist die Stelleinheit 62 transparent gezeichnet, so dass die Anordnung der Blendenelemente 70 erkennbar ist.

Wie Figur 7 erkennen lässt, weist die Stelleinheit 62 eine ringförmige Geometrie auf. Entsprechend weist die Stelleinheit 62 einen Innendurchmesser 62.6 und eine kreisförmige äußere Umfangsbegrenzung 62.7 auf. Diese Bauweise ist bevorzugt. Allerdings kann es auch vorgesehen sein, dass die Umfangsbegrenzung 62.7 nicht ringförmig ist, sondern eine andere Gestalt aufweist.

Die Stelleinheit 62 bildet eine Führungsfläche 62.1, welche im montierten Zustand der Verstelleinrichtung 60 den Blendenelementen 70 zugeordnet ist. Diese Führungsfläche 62.1 steht den Gleitflächen 71 der Blendenelemente 70 gegenüber. Entsprechend können die Blendenelemente 70 mit ihren Gleitflächen 71 an der Führungsfläche 62.1 anliegen. In die Stelleinheit 62 sind Gleitführungen 62.2 eingearbeitet. Die Gleitführungen 62.2 können als schlitzförmige Durchbrüche ausgeführt sein, die aus der Stelleinheit 72 ausgenommen sind. Die Gleitführungen 62 weisen einen linearen Führungsbereich 62.4 auf. An diesen linearen Führungsbereich 62.4 können sich aus Stabilitätsgründen beispielsweise Endbereiche 62.3, 62.5 der Stelleinheit 62 anschließen.

Für die Montage der Verstelleinrichtung 60 wird die Stelleinheit 62 auf die Blendenelemente 70 aufgesetzt. Dabei greifen die Führungselemente 79.1 der Blendenelemente 70 jeweils in einen Führungsbereich 62.4 der Gleitführungen 62.2 ein.

Im Montagezustand der Verstelleinrichtung 60 ist die Lagereinheit 61 drehfest im Verdichter gehalten. Die Stelleinheit 62 kann in Umfangsrichtung verdreht werden. Zu diesem Zweck kann beispielsweise ein Aktuator (nicht dargestellt) verwendet sein, der an der Stelleinheit 62 angreift, um diese in Umfangsrichtung verdrehen zu können.

Figur 7 stellt den maximalen Öffnungsquerschnitt der Verstelleinrichtung 60 dar. Entsprechend sind die Blendenelemente 70 so verstellt, dass sie zwischen der Stelleinheit 62 und der Lagereinheit 61 aufgenommen sind. Dementsprechend ragen die Blendenelemente 70 nicht über den Innendurchmesser 61.6 der Lagereinheit 61 bzw. den Innendurchmesser 62.6 der Stelleinheit 62 vor. Zu diesem Zweck sind die Flanken 77 der Blendenelemente 70 entsprechend so ausgebildet, dass sie nicht über die Umfangsbegrenzungen 61.7, 62.7 vorragen. Die Blendenelemente 70 sind in der Öffnungsstellung so angeordnet, dass die Dichtabschnitte 73.1 und die Begrenzungsbereiche 74 nahezu bündig mit den Innendurchmessern 61.6, 62.6 der Lagereinheit 61 und der Stelleinheit 62 sind, und damit mit dem Öffnungsquerschnitt Ömax der Gaszuführung 43 im Bereich der anschließenden Strömungsführung 51 des Gehäuseteils 50 bzw. der anschließenden Wandung 43.1 in Strömungsrichtung hinter der Verstelleinrichtung 60.

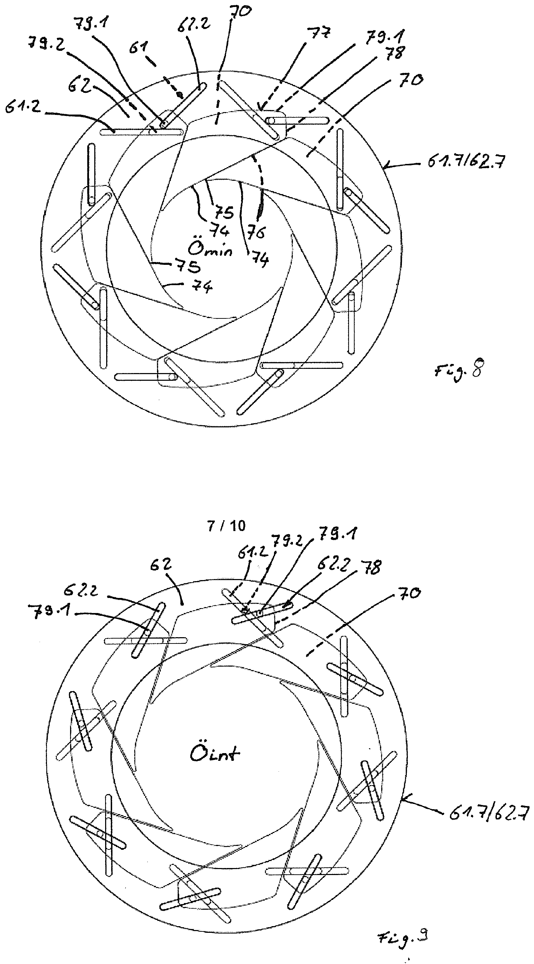

Wenn nun in Figur 7 die Stelleinheit 62 gegenüber der Lagereinheit 61 im Uhrzeigersinn gedreht wird, so treibt die Stelleinheit 62 über die Gleitführungen 62.2 die Führungselemente 79.1 der Blendenelemente 70 an. Entsprechend werden die Führungselemente 79.1 in den Gleitführungen 62.2 linear verstellt. Da nun die Blendenelemente 70 gleichzeitig auch mit dem zweiten Führungselement 79.2 in der Gleitführung 61.2 der Lagereinheit 61 zwangsgeführt sind, werden die Blendenelemente 70 in Führungsrichtung des linearen Führungsbereich 61.4 linear verstellt. Auf diese Weise können die Blendenelemente 70, ausgehend von der Öffnungsstellung gemäß Figur 7, linear in die Schließstellung gemäß Figur 8 verschoben werden.

Figur 8 zeigt, dass in der Schließstellung der Blendenelemente 70 die konkaven Begrenzungsbereiche 74 der einzelnen Blendenelemente 70 so zueinander ausgerichtet sind, dass sich ein minimaler Öffnungsquerschnitt Ömin ergibt, der annähernd kreisförmig ausgebildet ist.

In der Schließstellung gemäß Figur 8 liegen die Dichtabschnitte 73.1 der Blendenelemente 70 an den Dichtabschnitten 76.1 der benachbarten Blendenelemente 70 an. Auf diese Weise ergibt sich mit den Gleitflächen 71 und/oder den Gleitflächen 72 der Blendenelemente 70 in der Schließstellung eine geschlossene Blendenfläche, die nur den minimalen Öffnungsquerschnitt Ömin freigibt.

Erfindungsgemäß ist es nun vorgesehen, dass ausgehend von der Schließstellung, in der die Dichtabschnitte 73.1, 76.1 aneinanderliegen, die Blendenelemente 70 kontinuierlich in die Öffnungsstellung (siehe Figur 7) verstellt werden können. Hierzu ist es vorgesehen, dass ausgehend von der Schließstellung bei einer Verdrehung der Stelleinheit 62 (in Figur 8 entgegengesetzt zur Uhrzeigerrichtung), die Dichtabschnitte 73.1, 76.2 der benachbarten Blendenelemente 70 sich geringfügig zueinander beabstandeten, um die Verstellung der Blendenelemente 70 in die Öffnungsstellung möglichst nicht zu behindern. Vorzugsweise sind in jeder Stellung zwischen der Schließstellung und der Öffnungsstellung die Dichtabschnitte 73.1, 76.1 zueinander parallel ausgerichtet. Besonders bevorzugt ist der erste linear verlaufende Dichtabschnitt 73.1 des Blendenelements 70 im Winkel 90°+β zu der Bewegungsrichtung des Blendenelements 70 angestellt. Dieser Winkel β ist kleiner als 0,5 * X, wobei: "X = 360° / (Anzahl der Blendenelemente (70)". Vorliegend beträgt X=45°. β ist daher kleiner als 22,5° zu wählen.

Im vorliegenden Ausführungsbeispiel entspricht α = X. Damit ist auch der Winkel α zwischen den beiden linearen Dichtabschnitten 73.1, 76.1 des Blendenelements 70 kleiner β (vorliegend also kleiner 22,5°) zu wählen.

Weiterhin kann es bevorzugt erfindungsgemäß so sein, dass gilt:

"(0,5 * X - β) < 10°, vorzugsweise kleiner 5°, besonders bevorzugt kleiner 2°",

Im vorliegenden Ausführungsbeispiel beträgt "(0,5 * 45 °- β) < 2°", so dass β > 20,5° ist.

Besonders bevorzugt sollte bei der Dimensionierung berücksichtigt werden, dass β<0,5 α bzw. β < 0,5 X gewählt ist. Im vorliegenden Ausführungsbeispiel wäre diese Grenze entsprechend gewählt als β < 0,5 X, also β < 22,5°

Die vorstehend genannten Winkelverhältnisse stellen sicher, dass sich die Dichtabschnitte 73.1, 76.1 unmittelbar nach verdrehen der Stelleinheit 62 aus der Schließstellung heraus voneinander abheben.

Bei einer weiteren Verstellung der Blendenelemente 70 bleiben die Dichtabschnitte 73.1, 76.1 in jeder Zwischenstellung zueinander parallel und beabstanden sich nur geringfügig voneinander. Hierdurch wird auch in der Zwischenstellung eine besonders gute Dichtwirkung der Blendenfläche erreicht.

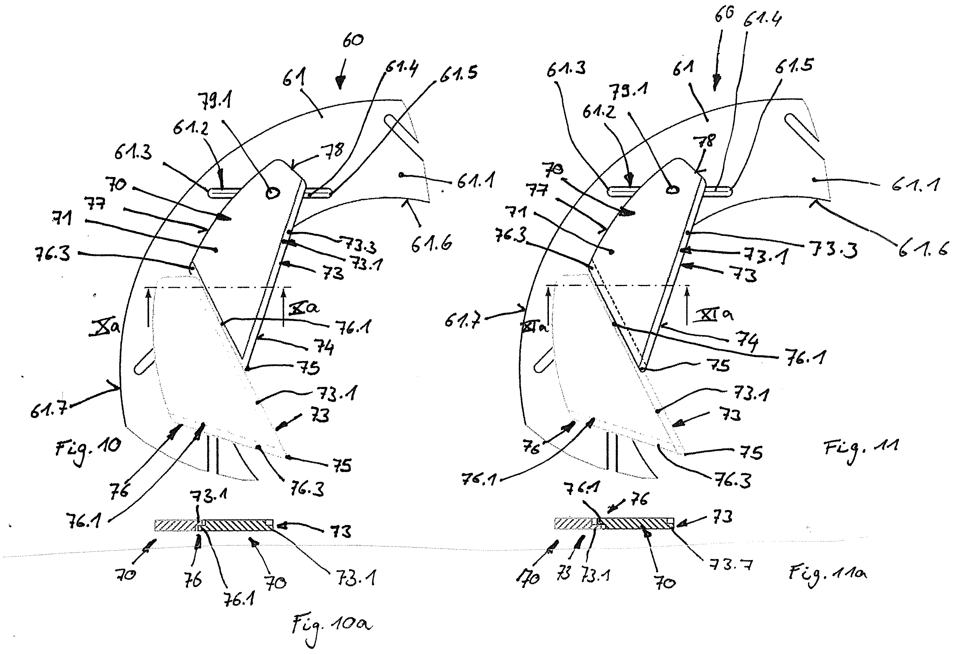

Figur 10 zeigt eine weitere Ausgestaltungsvariante der Erfindung. Gleiche Bezugszeichen kennzeichnen dabei gleiche Bauteilebereiche. Zur Vermeidung von Wiederholungen kann daher auf die vorstehenden Ausführungen Bezug genommen werden. Es werden nachstehend lediglich die vorgenommenen Änderungen an der alternativen Ausführungsform erläutert.

Wie Figur 10 zeigt, weisen die Blendenelemente 70 im ersten Stellbereich 73 und auch im zweiten Stellbereich 76 Überlappungsabschnitte 63.3, 76.3 auf. Die Überlappungsabschnitte 63.3, 76.3 sind dabei als Stufen ausgebildet. Die benachbarten Blendenelemente 70 weisen ebenfalls Überlappungsabschnitte 73.1, 76.1 auf, die korrespondierend stufenförmig ausgebildet sind.

Figur 10 lässt erkennen, dass die Überlappungsabschnitte 73.3, 76.3 benachbarter Blendenelemente 70 überlappen. Dabei ist die Zuordnung so getroffen, dass die Projektionen der Überlappungsabschnitte 73.3, 76.3 in Strömungsrichtung in der Gaszuführung 43, also in Richtung der Drehachse des Verdichterrads 41, überlappen. Damit bilden die Überlappungsabschnitte 73.3, 76.3 der benachbarten Blendenelemente 70 labyrinthartige Dichtungen, die im Bereich der Blendenfläche einen Strömungswiderstand bilden. Dieser Strömungswiderstand verhindert oder verringert die Gefahr, dass unbeabsichtigt Luft durch die Spaltbereiche zwischen den benachbarten Dichtabschnitten 73.1, 76.2 hindurchströmt.

Figur 10a zeigt einen Schnittverlauf längs der in Figur 10 markierten Schnittlinie Xa-Xa. Wie diese Darstellung erkennen lässt sind die Stufen der Blendenelemente 70, welche die Dichtabschnitte 73.1 und 76.1 bilden, jeweils zu einer Seite des Blendenelements 70 orientiert. Die Dichtabschnitte 73.1, 76.1 des in der Figur 10a rechten Blendenelements 70 sind an der Rückseite angeordnet. Korrespondierend sind die Dichtabschnitte 73.1, 76.1 des linken Blendenelements 70 an der Vorderseite angeordnet.

Figur 10 zeigt eine Zwischenstellung zwischen der Schließstellung und der Öffnungsstellung. Wie diese Darstellung erkennen lässt, sind in dieser Stellung die Dichtabschnitte 73.1, 76.1 zueinander parallel beabstandet angeordnet, wobei sich nur ein schmaler Spaltbereich ergibt. Dieser Spaltbereich ist durch den Überlappungsabschnitt 73.3, 76.3 überdeckt.

Die Figuren 11 und 11a zeigen eine Weiterbildung der Ausgestaltungsvariante gemäß den Figuren 10 und 10a. Im Unterschied zu der Ausgestaltungsvariante nach Figur 10/10a sind bei der Ausgestaltung gemäß den Figuren 11/11a die Dichtabschnitte 73.1, 76.1 jedes Blendenelements 70 wechselweise an der Vorderseite und der Rückseite des Blendenelements 70 angeordnet. Dies lässt Figur 11a deutlich erkennen. Auf diese Weise wird es möglich alle Blendenelemente baugleich auszugestalten.

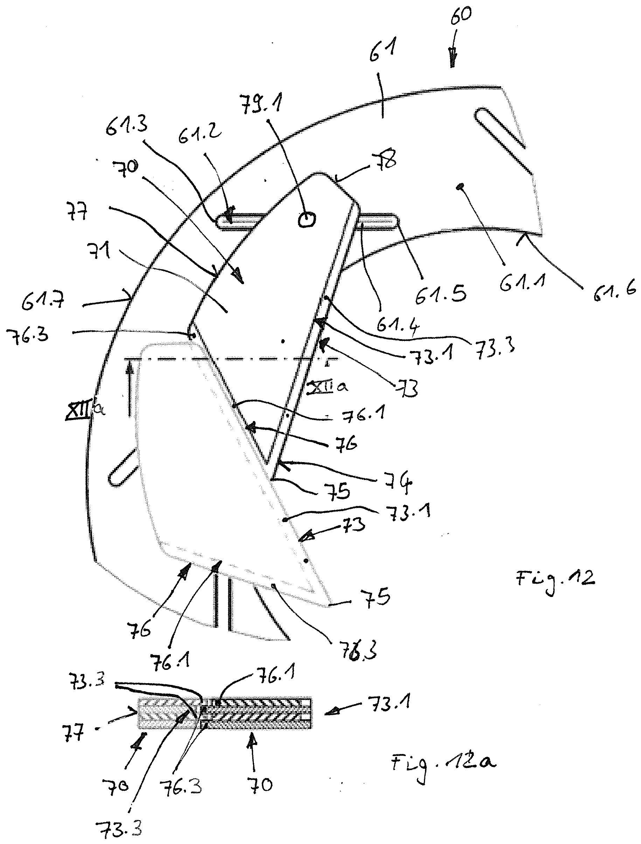

Figuren 12 und 12a zeigen eine weitere Ausgestaltungsvariante der Erfindung. Diese Ausgestaltungsvariante entspricht prinzipiell dem Aufbau der Verstelleinrichtung 61 gemäß den vorangegangenen Figuren 10 bis 11a. Nachfolgend wird daher lediglich auf die Unterschiede eingegangen. Bei der Erfindungsvariante nach den Figuren 12 und 12a weisen die Blendenelemente 70 an ihren Dichtabschnitten 73.1, 76.1 jeweils mehrere Überlappungsabschnitte 73.3, 76.3 auf. Vorliegend sind an den Dichtabschnitten 73.1 und 76.1 eines Blendenelements 70 jeweils zwei vorstehende Überlappungsabschnitte 73.3, 76.3 vorgesehen. Figur 11 zeigt nun, dass bei Verwendung baugleicher Blendenelemente 70 die benachbarten Dichtabschnitte 73.1, 76.1 zweier Blendenelemente 70 kammartig ineinandergreifen, wobei sich die Projektionen der Überlappungsabschnitte 73.3, 76.3 in Richtung der Drehachse des Verdichterrads 41 überdecken, um eine Labyrinthdichtung zu bilden.

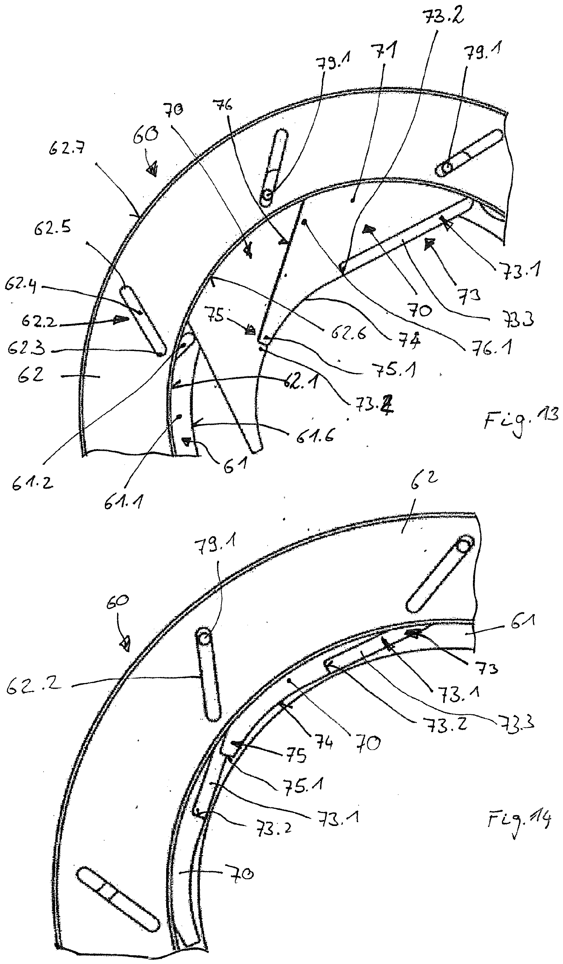

In den Figuren 13 und 14 ist eine Weiterbildung der Erfindungsausgestaltung gemäß den Figuren 4 bis 9 gezeigt. Zur Vermeidung von Wiederholungen kann daher auf die obigen Ausführungen Bezug genommen werden. Nachstehend werden nur die Unterschiede erläutert.

Während bei der Ausführungsform gemäß den Figuren 4 bis 9 in der Schließstellung der Blendenelemente 70 die Verfahrbewegung der Blendenelemente 70 entweder durch die Führungselemente 79.1, 79.2 begrenzt ist, die an den zugeordneten Endbereichen 62.3, 61.5 der Gleitführungen 62,61 anschlagen oder durch Kontakt der Dichtabschnitte 73.1, 76.1 zweier benachbarter Blendenelemente, weisen die Blendenelemente 70 nach Figur 13 Anschläge 73.2 und korrespondierende Gegenanschläge 75.1 auf. In der Schließstellung schlagen die Anschläge 75.1 der Blendenelemente 70 an den zugeordneten Gegenanschlägen 75.1 der benachbarten Blendenelemente 70 an, um die Schließbewegung der Blendenelemente 70 zu begrenzen.

Wie die Figuren 13 und 14 zeigen, können die Anschläge 73.2 vorzugsweise im Übergangsbereich zwischen den Dichtabschnitten 73.1 zu den Begrenzungsbereichen 74 gebildet sein. Der Gegenanschlag 75.1 kann dann beispielsweise von dem Endabschnitt 75 gebildet sein.

Wie Figuren 13 und 14 erkennen lassen, können die Blendenelemente 70 mit Überlappungsabschnitten 73.3 ausgerüstet sein.

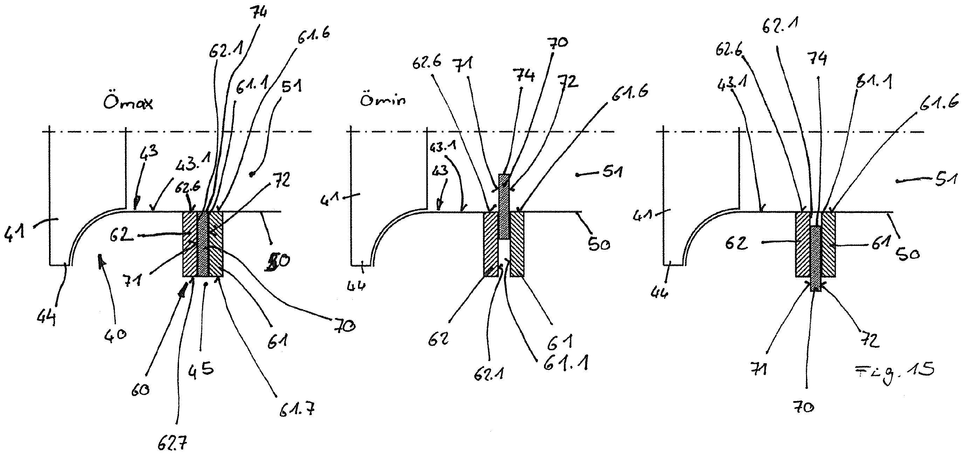

Fig. 15 zeigt als Erfindungsvariante verschiedene Betriebszustände der Verstelleinrichtung 60. Schematisch dargestellt sind Längsschnitte durch den Verdichter, wenn sich die Blendenelemente 70 in der Öffnungsstellung (maximaler Öffnungsquerschnitt Ömax) entsprechend Fig. 7, der Schließstellung (minimaler Öffnungsquerschnitt Ömin) entsprechend Fig. 8 oder einer zurückgezogenen Stellung befinden,

In der zurückgezogenen Stellung werden die Blendenelemente 70 so verfahren, dass ihr Öffnungsquerschnitt größer ist als der Öffnungsquerschnitt Ömax der Öffnungsstellung. Auf diese Weise bilden die Dichtabschnitte 73.1 und die Begrenzungsbereiche 74 der Blendenelemente 70 zusammen mit den Führungsflächen 61.1, 62.1 der Lagereinheit 61 und der Stelleinheit 62 eine umlaufende Nut in der Strömungsführung 51. Die umlaufende Nut fungiert als Resonator, und kann somit dazu dienen bestimmte Frequenzen des Verdichters auszulöschen. Grundsätzlich ist es möglich die Blendenelemente 70 zwischen der neutralen (Ömax) und der zurückgezogenen Position stufenlos zu verfahren und so den Resonator auf die auszulöschende Frequenz anzupassen.

Es versteht sich von selbst, dass die Form der Nut durch Gestaltung der Führungsflächen 61.1, 62.1 der Lagereinheit 61 und der Stelleinheit 62 im Übergangsbereich zur Wandung 43.1 und zur Strömungsführung 51 entsprechend den aus dem Stand der Technik bekannten Maßnahmen gestaltet werden können.

Die Erfindung ist nicht auf das beschriebene Ausführungsbeispiel beschränkt. Im Rahmen der Erfindung kann es vielmehr auch vorgesehen sein, dass der Verdichter als Unterstützung für einen Abgas-Turbolader dient oder von einem Abgasturbolader entkoppelt angeordnet ist. Weiterhin ist es denkbar, dass der Verdichter ein elektrisch angetriebener Verdichter ist, wobei das Verdichterrad von einem Elektromotor angetrieben wird. Auch ein solcher elektrisch angetriebener Verdichter kann Teil eines Turboladers für einen Verbrennungsmotor sein. Weiterhin kann es vorgesehen sein, dass der Verdichter gemäß der Erfindung beispielsweise in Verbindung mit einer Luftversorgung für eine Brennstoffzelle eingesetzt wird. Hier kann das Verdichterrad 41 insbesondere ebenfalls von einem Elektromotor angetrieben sein.

**Patentansprüche**

1. Verdichter, insbesondere Gasverdichter, beispielsweise für einen Turbolader, zum Verdichten eines gasförmigen Fluides, mit einem Verdichtergehäuse (40) in dem ein Verdichterrad (41) drehbar angeordnet ist, wobei das Verdichtergehäuse (40) eine Gaszuführung (43) aufweist, über die Gas dem Verdichterrad (41) zuförderbar ist, wobei ein Verdichterkanal (42) vorgesehen ist, über den das verdichtete Gas vom Verdichterrad (41) abführbar ist, wobei im Bereich der Gaszuführung (43) eine Verstelleinrichtung (60) angeordnet ist, wobei die Verstelleinrichtung (60) linear zwischen einer Schließstellung und einer Öffnungsstellung verstellbare Blendenelemente (70) aufweist, mittels denen der Öffnungsquerschnitt der Gaszuführung (43) in einem Kanalbereich, zur Bildung eines minimalen Öffnungsquerschnitts (Ömin) in der Schließstellung und eines maximalen Öffnungsquerschnitts (Ömax) in der Öffnungsstellung, veränderbar ist, wobei jeweils zwei benachbarte Blendenelemente (70) Dichtabschnitte (73.1, 76.1) aufweisen, die in der Schließstellung zur Bildung einer Blendenfläche einander gegenüberstehen, insbesondere aneinander anliegen,
**dadurch gekennzeichnet,**
**dass** die Dichtabschnitte (73.1, 76.1) in der Öffnungsstellung und/oder in einer Zwischenstellung zwischen der Öffnungsstellung und der Schließstellung zueinander beabstandet angeordnet sind.

2. Verdichter nach Anspruch 1, **dadurch gekennzeichnet, dass** die Dichtabschnitte (73.1, 76.1) auf dem Verstellweg zwischen der Öffnungs- in die Schließstellung zueinander parallel ausgerichtet sind.

3. Verdichter nach Anspruch 1 oder 2, **dadurch gekennzeichnet, dass** die Blendenelemente (70) zwei linear verlaufende Dichtabschnitte (73.1, 76.1) aufweisen, die zueinander im Winkel ($\alpha$) angeordnet sind, wobei der eine Dichtabschnitt (73.1, 76.1) an einem zugeordneten Dichtabschnitt (73.1, 76.1) eines ersten benachbarten Blendenelements (70) und der weitere Dichtabschnitt (70 an einem zugeordneten Dichtabschnitt (73.1, 76.1) eines zweiten benachbarten Blendenelements (70) anliegt.

4. Verdichter nach einem der Ansprüche 1 bis 3, **dadurch gekennzeichnet, dass** ein erster linear verlaufender Dichtabschnitt (73.1) des Blendenelements (70) senkrecht zu einer in einem Winkel ($\beta$) zur Bewegungsrichtung des Blendenelements (70) angeordneten Richtung angestellt ist, und dass dieser Winkel ($\beta$) kleiner ist als 0,5 mal X, wobei: "X = 360° / Anzahl der Blendenelemente (70)" ist und/oder X dem Winkel entspricht, den die beiden linearen Dichtabschnitte (73.1, 76.1) des Blendenelements (70) einschließen.

5. Verdichter nach einem der Ansprüche 1 bis 4, **dadurch gekennzeichnet, dass** die Differenz zwischen dem halben Winkel X, wobei: "X = 360° / Anzahl der Blendenelemente (70)" ist und/oder X dem Winkel entspricht, den die beiden linearen Dichtabschnitte (73.1, 76.1) des Blendenelements (70) einschließen und dem Winkel ($\beta$) welcher zwischen einer Senkrechten auf den Dichtabschnitt (73.2) des Blendenelements (70) und der Bewegungsrichtung des Blendenelements (70) gebildet ist, kleiner ist als 10°, so dass gilt:

$$\text{„}(0,5 * X - \beta) < 10°\text{"},$$

oder dass die Differenz zwischen dem halben Winkel X, wobei: "X = 360° / Anzahl der Blendenelemente (70)" ist und/oder X dem Winkel entspricht, den die beiden linearen Dichtabschnitte (73.1, 76.1) des Blendenelements (70) einschließen und dem Winkel (β) welcher zwischen einer Senkrechten auf den Dichtabschnitt (73.2) des Blendenelements (70) und der Bewegungsrichtung des Blendenelements (70) gebildet ist, kleiner ist als 5°, so dass gilt:

$$\text{„}(0,5 * X - \beta) < 5°\text{"},$$

oder dass die Differenz zwischen dem halben Winkel X, wobei: "X = 360° / Anzahl der Blendenelemente (70)" ist und/oder X dem Winkel entspricht, den die beiden linearen Dichtabschnitte (73.1, 76.1) des Blendenelements (70) einschließen und dem Winkel (β) welcher zwischen einer Senkrechten auf den Dichtabschnitt (73.2) des Blendenelements (70) und der Bewegungsrichtung des Blendenelements (70) gebildet ist, kleiner ist als 2°, so dass gilt:

$$\text{„}(0,5 * X - \beta) < 2°\text{"},$$

6. Verdichter nach einem der Ansprüche 1 bis 5, **dadurch gekennzeichnet, dass** die Dichtabschnitte (73.1, 76.1) in den Zwischenstellungen zwischen der Öffnungsstellung und der Schließstellung und in der Öffnungsstellung nicht weiter als 1 mm, bevorzugt nicht weiter als 0,3 mm zueinander beabstandet angeordnet sind.

7. Verdichter nach einem der Ansprüche 1 bis 6, **dadurch gekennzeichnet, dass** zumindest ein Blendenelement (70) wenigstens zweier benachbarter Blendenelemente (70) im Bereich zumindest eines seiner Dichtabschnitte (73.1, 76.1) einen Überlappungsabschnitt (73.3, 76.3) aufweist, dessen Projektion in Richtung der Strömungsrichtung in der Gaszuführung (43), vorzugsweise in Richtung der Drehachse des Verdichterrads (41), den Dichtabschnitt (76.1, 73.1) des benachbarten Blendenelements (70) in der Schließstellung und in zumindest einer Zwischenstellung zwischen der Öffnungsstellung und der Schließstellung zumindest teilweise überdeckt.

8. Verdichter nach Anspruch 7, **dadurch gekennzeichnet, dass** wenigstens eines der Blendenelemente (70) an beiden Dichtabschnitten (73.1, 76.1) einen Überlappungsabschnitt (73.3, 76.3) aufweist, wobei der eine Überlappungsabschnitt (73.3) das benachbarte erste Blendenelement (70) in Strömungsrichtung der Gaszuführung (43) vorne überlappt und der zweite Überlappungsabschnitt (76.3) das benachbarte erste Blendenelement (70) in Strömungsrichtung der Gaszuführung (43) hinten überlappt, und/oder dass die Blendenelemente (70) baugleich sind.

9. Verdichter nach Anspruch 7 oder 8, **dadurch gekennzeichnet, dass** die Dichtabschnitte (73.1, 76.1) wenigstens zweier benachbarter Blendenelemente (70) Überlappungsabschnitte (73.3, 76.3) aufweisen, deren Projektionen sich in Richtung der Strömungsrichtung in der Gaszuführung (43), vorzugsweise in Richtung der Drehachse des Verdichterrads (41), sich zumindest teilweise überdecken.

10. Verdichter nach einem der Ansprüche 7 bis 9, **dadurch gekennzeichnet, dass** der oder die Überlappungsabschnitte (73.3, 76.3) wenigstens zweier benachbarter Blendenelemente (70) in der Schließstellung und/oder in wenigstens einer Zwischenstellung dichtend auf dem oder den benachbarten Blendenelement/-en (70) aufliegt/aufliegen, wobei insbesondere vorgesehen sein kann, dass die Überlappungsabschnitte als gegenüber einem Grundkörper des Blendenelements biegbarer Dichtungsansatz ausgebildet sind und/oder dass die benachbarten Blendenelemente (70) gegeneinander versetzbar sind, um die Überlappungsabschnitte (73.3, 76.3) zur dichtenden Anlage an dem oder den benachbarten Blendenelementen (70) zu bringen.

11. Verdichter nach einem der Ansprüche 7 bis 10, **dadurch gekennzeichnet, dass** der wenigstens eine Überlappungsabschnitt (73.3, 76.3) einteilig an das Blendenelement (70) angeformt ist.

12. Verdichter nach einem der Ansprüche 1 bis 11, **dadurch gekennzeichnet, dass** die Verstelleinrichtung (60) eine Lagereinheit (60) aufweist, die vorzugsweise in Form eines Lagerrings ausgebildet ist, dass die Lagereinheit (61) Gleitführungen (61.2) mit Linear-Führungsbereichen (61.4) aufweist, an denen jeweils ein Blendenelement (70) mittels eines Führungselements (79.2) verschiebbar gelagert ist, und dass vorzugsweise die Lagereinheit (61) Führungsflächen (61.1) bildet, auf denen die Blendenelemente (70) mit Gleitflächen (71 abgestützt sind.

13. Verdichter nach einem der Ansprüche 1 bis 12, **dadurch gekennzeichnet, dass** die Verstelleinrichtung (60) eine Stelleinheit (62) aufweist, die vorzugsweise in Form eines Stellrings ausgebildet ist, dass die Verstelleinrichtung (60) eine Betätigungseinrichtung aufweist, mittels der die Stelleinheit (62) verstellbar, insbesondere verdrehbar ist, dass die Stelleinheit (62) Gleitführungen (62.2) mit Linear-Führungsbereichen (62.4) aufweist, an denen jeweils ein Blendenelement (70) mittels eines Führungselements (79.1) verschiebbar gelagert ist, und dass vorzugsweise die Stelleinheit (62) Führungsflächen (62.1) bildet, auf denen die Blendenelemente (70) mit Gleitflächen (72) abgestützt sind.

14. Verdichter nach einem der Ansprüche 1 bis 13, **dadurch gekennzeichnet, dass** sich an die Dichtungsabschnitte (73.1) der Blendenelemente (70) Begrenzungselemente (74) anschließen, die konkav ausgebildet sind, und dass die Begrenzungselemente (74) im Schließzustand der Blendenelemente (70) eine zumindest annähernd kreisförmige Blendenöffnung bilden.

15. Verdichter nach einem der Ansprüche 1 bis 13, **dadurch gekennzeichnet, dass** die Bewegung der Blendenelemente (70) von der Öffnungsstellung in die Schließstellung mittels eines Anschlages (75) begrenzt ist, der in der Schließstellung an einem Gegenanschlag (75.1) anliegt.

16. Verdichter, insbesondere Turbolader, zum Verdichten eines gasförmigen Fluides, mit einem Verdichtergehäuse (40) in dem ein Verdichterrad (41) drehbar angeordnet ist, wobei das Verdichtergehäuse (40) eine Gaszuführung (43) aufweist, über die Gas dem Verdichterrad (41) zuförderbar ist, wobei ein Verdichterkanal (42) vorgesehen ist, über den das verdichtete Gas vom Verdichterrad (41) abführbar ist, wobei im Bereich der Gaszuführung (43) eine Verstelleinrichtung (60) angeordnet ist, wobei die Verstelleinrichtung (60) zwischen einer Schließstellung und einer Öffnungsstellung verstellbare Blendenelemente (70) aufweist, mittels denen der Öffnungsquerschnitt der Gaszuführung (43) in einem Kanalbereich, zur Bildung eines minimalen Öffnungsquerschnitts ($Ö_{min}$) in der Schließstellung und eines maximalen Öffnungsquerschnitts ($Ö_{max}$) in der Öffnungsstellung, veränderbar ist, wobei jeweils zwei benachbarte Blendenelemente (70) Dichtabschnitte (73.1, 76.1) aufweisen, die in der Schließstellung zur Bildung einer Blendenfläche einander gegenüberstehen, insbesondere aneinander anliegen, **dadurch gekennzeichnet, dass** die Blendenelemente (70) in eine zurückgezogene Betriebsposition verstellbar sind, in der Körperbereich der Blendenelemente (70) zumindest bereichsweise eine Vertiefung in der Gaszuführung (43), insbesondere eine umlaufende Nut, zur Bildung eines Helmholtzresonators begrenzen, und wobei insbesondere vorgesehen sein kann, dass die Blendenelemente (70) zwischen mehreren zurückgezogenen Betriebspositionen, vorzugsweise stufenlos verstellbar sind.

17. Verdichter nach Anspruch 16, **gekennzeichnet durch** einen der Ansprüche 1 bis 15.

Fig. 1

Fig. 2

Fig 3

FIg. 4

Fig. 5

Fig. 6

EP 3 869 020 A1

Fig. 7

Fig. 8

Fig. 9

Fig. 10

Fig. 10a

Fig. 11

Fig. 11a

Fig. 12

Fig. 12a

Fig. 13

Fig. 14

Fig. 15

Europäisches Patentamt
European Patent Office
Office européen des brevets

# EUROPÄISCHER RECHERCHENBERICHT

**Nummer der Anmeldung**

EP 20 15 9077

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2018 202066 A1 (BMTS TECH GMBH & CO KG [DE]) 14. August 2019 (2019-08-14) | 1-5, 12-14 | INV. F02B37/22 |
| Y | * das ganze Dokument * ----- | 6-11,15 | F01D17/16 F02C9/22 |
| X | JP 2016 173051 A (TOYOTA IND CORP) 29. September 2016 (2016-09-29) * das ganze Dokument * ----- | 1 | |
| Y | US 2017/298943 A1 (MOHTAR HANI [FR] ET AL) 19. Oktober 2017 (2017-10-19) | 6 | |
| A | * Absatz [0045]; Abbildungen 4a, 6a * ----- | 1 | |
| Y | US 2017/211707 A1 (WAKAYAMA TOMIHIRO [JP] ET AL) 27. Juli 2017 (2017-07-27) * das ganze Dokument * ----- | 7-11,15 | |

**RECHERCHIERTE SACHGEBIETE (IPC)**

F02B
F01D
F02K
F02C

~~Der vorliegende Recherchenbericht wurde für alle Patentans~~prüche erstellt

| Recherchenort | Abschlußdatum der Recherche | Prüfer |
|---|---|---|
| München | 24. Juni 2020 | Kolodziejczyk, Piotr |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches
Patentamt

European
Patent Office

Office européen
des brevets

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☐ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☒ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

1-15

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

**Europäisches Patentamt**

**European Patent Office**

**Office européen des brevets**

**MANGELNDE EINHEITLICHKEIT
DER ERFINDUNG
ERGÄNZUNGSBLATT B**

**Nummer der Anmeldung**

EP 20 15 9077

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-15

   Verdichter mit Blendeelemente die beabstandete Dichtabschnitte aufweisen.
   ---

2. Ansprüche: 16, 17

   Verdichter mit Blendeelemente zur Bildung eines Helmholtzresonators.
   ---

**ANHANG ZUM EUROPÄISCHEN RECHERCHENBERICHT
ÜBER DIE EUROPÄISCHE PATENTANMELDUNG NR.**

EP 20 15 9077

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-06-2020

| Im Recherchenbericht angeführtes Patentdokument | Datum der Veröffentlichung | Mitglied(er) der Patentfamilie | Datum der Veröffentlichung |
|---|---|---|---|
| DE 102018202066 A1 | 14-08-2019 | CN 210135111 U<br>DE 102018202066 A1<br>US 2019249611 A1 | 10-03-2020<br>14-08-2019<br>15-08-2019 |
| JP 2016173051 A | 29-09-2016 | JP 6413858 B2<br>JP 2016173051 A | 31-10-2018<br>29-09-2016 |
| US 2017298943 A1 | 19-10-2017 | KEINE | |
| US 2017211707 A1 | 27-07-2017 | CN 107076317 A<br>JP WO2016052372 A1<br>US 2017211707 A1<br>WO 2016052372 A1 | 18-08-2017<br>13-07-2017<br>27-07-2017<br>07-04-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102018202066 A1
- WO 2018106620 A1
- EP 3236077 A1